# EUROPEAN PATENT APPLICATION

(11) **EP 3 441 914 A1**
(43) Date of publication of application: **13.02.2019**
(21) Application number: 17185399.7
(22) Date of filing: 08.08.2017
(51) Int. Cl.: G06Q 10/04, G06Q 10/06, G06Q 50/30

(54) **TRANSPORTATION NETWORK USER DEMAND PREDICTION**

(71) Applicant: Zipabout Limited, Oxford Oxfordshire OX1 3HJ (GB)
(72) Inventor: Chick, Daniel, Buckinghamshire HP7 0NF (GB)
(74) Representative: Horler, Philip John

(57) **Abstract**

A demand prediction system and method for predicting likely user demand on a transportation network comprising receiving first user interaction information relating to the interactions of a first plurality of users with a first transportation information provider, the first transportation information provider being suitable for providing transportation information relating to at least part of the transportation network to a user in response to a user query, and determining a prediction of likely user demand for at least part of the transportation network based at least in part on the first user interaction information.

## Description

### Technical Field

The present disclosure relates to a demand prediction system and method for predicting likely user demand on a transportation network.

### Background

Predicting how transportation (or transit) systems are likely to be used by people in the future may be desirable for many different reasons. For example, knowing how many people typically travel between particular railway stations on a train service may be helpful information to have when revising a railway timetable. Likewise, understanding which buses are most and least used at different times of the day may help a bus network operator to re-distribute the allocation of buses and/or change the bus routes in order to serve passengers better. Previously, in order to predict how transportation systems are likely to be used in the future, an understanding of how people are currently using the transportation system has been sought.

One technique for quantifying usage of a particular transportation service is to carry out a manual count of passengers using the service. For example, for a particular timetabled train service starting at Station A at time t_{A}, terminating at Station E at time t_{E}, and stopping at intermediate Stations B, C and D at times t_{B}, t_{C} and t_{D}, a person may be employed to count the number of passengers boarding and alighting the train at each station. This may need to be repeated over a number of days, weeks or months in order to understand the typical usage of that service. It may be appreciated that this is a time consuming and costly process, and offers an understanding of only one particular service on a transportation network. For a transportation network with 1000s or 10,000s of services offered every day (for example, a nationwide railway network, or bus network), understanding usage across the entire network is not practical with manual counting.

Furthermore, understanding passenger numbers on each particular transportation service in isolation cannot provide an understanding of how passengers may typically move between different services of the same means of transportation (single-modal transportation) (for example, taking a first train from Station J to Station L, changing to a second train at Station L and then travelling on the second train to Station P), or how passengers typically navigate between different means for transportation (multi-modal transportation) (for example, taking a train from Station J to Station M, changing at Station M to a tram and then travelling on the tram to tram stop I). It may be beneficial to understand how passengers navigate between different services on the same mode of transportation and/or different modes of transportation in order to appreciate how one service may affect another, for example when planning arrival and departure times of different services at transportation hubs, or when planning the construction of new transportation hubs, or when trying to assess the impact of scheduled or unscheduled infrastructure disruption, etc.

US 2016/0364645 A1 describes an approach to reconstructing trips taken by passengers on a transportation network by using ticket validation information from automatic fare collection systems at the start and/or end of journeys on a transportation network and then estimating the actual origin, destination and arrival/departure times of each trip. A demand model can then be generated from the estimated origins, destinations and times, using which a simulated response of the transportation network to proposed infrastructure changes may be created.

However, in practice, information from ticketing systems is often not very accessible and may not be available to a single entity across an entire transportation network (for example, where different train companies operate on different parts of the railway network, their ticketing systems may be operated quite independently, with the ticketing data being either not shared between them, or being not sharable owing to inconsistent data processing techniques). Furthermore, very limited information may be determined regarding how passengers move between different services within a transportation network. For example, within a metro system in a city, in order to travel from station G to station Q, a passenger may take a train on Line 1 from station G to H and change at station H to a train on Line 2 that will take them to station Q, or they may take a train on Line 3 from station G to station J and change at station J to a train on Line 4 that will take them to station Q. Typically, the passenger's entry to station G and exit from station Q may be discernable from ticketing information, but not the route they have used to make the journey. Furthermore, multimodal transportation information may not be discernable, since each mode of transportation may operate on an entirely different ticketing system. In this case, a passenger's exiting from a service on one mode of transportation may be identifiable, but it may be impossible to tell whether they have reached their destination, or if they are about to use another transportation service on a different mode of transportation.

US 8,571,918 B2 describes a technique for estimating how usage of a transportation service may increase or decrease as a result of a change to the service. The technique requires a determination of current usage to be made, which may be achieved using ticketing information (which suffers from the same shortcomings as above) or tracking users and potential users of the transportation service using GPS tracking. However, GPS tracking on a mass scale across transportation network (for example, a city transportation network or nationwide transportation network) may not be feasible for a number of reasons, not least of which is user privacy considerations.

Regardless of how an understanding of usage of transportation services is achieved, the nature of predicted future usage based on previous usage may be limited. Previous usage of transportation services may provide some useful information for how those services may typically be used in the future, but they may not be helpful for anticipating unusual changes in demand in the future. For example, if one service on a transportation network unexpectedly fails (for example, caused by a mechanical breakdown), demand on a different service on the transportation network may increase above that which would normally be expected. Likewise, a large public event, for example a public demonstration or large sporting event, may cause demand for particular services on a transportation network to increase above that which would normally be expected. These unusual changes in demand may not be predictable from historical usage information.

### Summary

In a first aspect, there is provided a demand prediction system for predicting likely user demand on a transportation network comprising a plurality of transportation nodes and a plurality of transportation services between transportation nodes, the system comprising a prediction module configured to receive first user interaction information relating to the interactions of a first plurality of users with a first transportation information provider, wherein the first transportation information provider is for providing transportation information relating to at least part of the transportation network to a user in response to a user query; and determine a prediction of likely user demand for at least part of the transportation network based at least in part on the first user interaction information.

Preferably, the prediction module is further configured to receive second user interaction information relating to the interactions of a second plurality of user with a second transportation information provider, wherein the second transportation information provider is for providing transportation information relating to at least part of the transportation network to a user in response to a user query, wherein determination of the prediction of likely user demand for at least part of the transportation network is further based at least in part on the second user interaction information. The first transportation information provider and the second transportation information provider may be independent from each other and/or there may be at least one user that is part of both the first plurality of users and the second plurality of users.

When there is a particular user that is part of both the first plurality of users and the second plurality of users, the first user interaction information may comprise: information relating to the interaction of the particular user with the first transportation information provider, and a unique identifier of the particular user, and wherein the second user interaction information may comprise: information relating to the interaction of the particular user with the second transportation information provider; and the unique identifier of the particular user.

The demand prediction system may further comprise a database comprising data identifying the plurality of transportation nodes and the plurality of transportation services, wherein the prediction module is further configured to store at least part of the first user interaction information in the database; and determine the prediction of likely user demand for at least part of the transportation network using the data stored in the database.

Preferably, the prediction module is configured to store in the database a plurality of weighted associations to associate each of the plurality of users to a respective one or more of the plurality of transportation nodes and/or one or more of the transportation edges, wherein each weighted association is indicative of a relative likelihood that the user will utilise the associated transportation node or transportation service.

Preferably, the database is configured to store the data in a graph structure.

Preferably, the first user interaction information comprises a plurality of unique user identifiers, each uniquely identifying a respective one of the plurality of users.

The demand prediction system may further comprise a notification module configured to generate a notification message for communication to at least one of the plurality of users based on the prediction of likely user demand; and output the notification message for communication to the at least one of the plurality of users using their unique user identifier.

The first user interaction information may comprise data indicative of at least part of a user query from at least one of the plurality of users to the first transportation information provider, the user query comprising one or more of: a transportation departure time; a transportation departure period of time; a transportation departure location; a transportation arrival time; a transportation arrival period of time; a transportation arrival location; a mode of transport identifier indicative of a user desired mode of transportation for at least part of a journey on the transportation network. The transportation departure location may be one of the plurality of transportation nodes and/or the transportation arrival location may be one of the plurality of transportation nodes.

Additionally, or alternative, the first user interaction information may comprise data indicative of at least one of: one or more transportation service for which information was presented to one of the plurality of users in response to a user query; one or more transportation service for which information was presented to one of the plurality of users in response to a user query and for which the user requested further detailed service information; one or more transportation node for which one of the plurality of users requested information relating to transportation services departing from, arriving at or passing through the one or more transportation nodes.

The prediction of likely user demand for at least part of the transportation network may comprise at least one of a predicted relative likely demand at one or more of the plurality of transportation nodes a point in time and/or during a period of time and/or a predicted relative likely demand for one or more of the plurality of transportation services.

The first transportation information provider may be configured to interact with the plurality of users via a transportation information website and/or via a transportation information application operating on user mobile electronic devices.

In a second aspect of the present disclosure, there is provided a method of predicting likely user demand on a transportation network comprising a plurality of transportation nodes and a plurality of transportation services between transportation nodes, the method comprising: receiving first user interaction information relating to the interactions of a first plurality of users with a first transportation information provider, wherein the first transportation information provider is for providing transportation information relating to at least part of the transportation network to a user in response to a user query; and determining a prediction of likely user demand for at least part of the transportation network based at least in part on the first user interaction information.

In a third aspect of the present disclosure, there is provided a computer program configured to perform the method of the second aspect when executed on one or more processors of an electronic device.

In a fourth aspect of the present disclosure, there is provided an electronic device comprising memory comprising the computer program of the third aspect and one or more processors for executing the computer program of the third aspect.

In a fifth aspect of the present disclosure, there is provided a method of providing user interaction information to a demand prediction system, the method comprising determining user interaction information based on an interaction between a user and a transportation information provider, wherein the transportation information provider is for providing transportation information relating to at least part of a transportation network to the user in response to a user query; and outputting the user interaction information for communication to the demand predict system for use in determining a prediction of likely user demand for at least part of the transportation network.

In a sixth aspect of the present disclosure, there is provided a computer program configured to perform the method of the fifth aspect when executed on one or more processors of an electronic device. The computer program may comprise an application programming interface or a software development kit.

In a seventh aspect of the present disclosure, there is provided an electronic device comprising memory comprising the computer program of the sixth aspect; and one or more processors for executing the computer program of the sixth aspect.

### Drawings

Non-limiting aspects of the disclosure are described, by way of example, with reference to the following drawings, in which:
Figure 1 shows an example schematic representation of a demand prediction system, a plurality of users and a plurality of transportation information providers;
Figure 2 shows an example schematic representation of some details of the demand prediction system of Figure 1;
Figure 3 shows a first example sequence diagram of communications between some of the entities represented in Figure 1, carrying out a method in accordance with the present disclosure;
Figure 4 shows an example flow diagram for a method of determining a prediction of likely user demand in accordance with the present disclosure;
Figure 5 shows a visualisation of an example graph structure for use as part of the method of Figure 4;
Figure 6 shows a second example sequence diagram of communications between some of the entities represented in Figure 1, carrying out a method in accordance with the present disclosure;
Figure 7 shows an example flow diagram for a method of a transportation information provider of Figure 1 communicating user interaction information to the demand prediction system of Figure 1 in accordance with a further aspect of the present disclosure; and
Figure 8 shows an example visualisation of a prediction of likely user demand.

### Detailed Description

The present disclosure relates to the prediction of likely user demand on at least a part of a transportation network (for example, a prediction of likely user demand at one or more transportation nodes in the transportation network and/or a prediction of likely user demand on one or more transportation services in the transportation network). The prediction of likely user demand is based on user interactions with transportation information providers (for example, navigation route planning websites/apps, transportation timetable and/or journey planning websites/apps, such as National Rail Enquiries or TfL Journey Planner in the UK, or transportation ticket vending websites/apps, etc). When a user interacts with one of these transportation information providers, for example by submitting a user enquiry relating to a journey that they might like to take in the future, user interaction information relating to their interaction with the transportation information provider may be sent to a demand prediction system. The way in which users interact with the transportation information provider may imply, to some level of certainty, how they are likely to use the transportation network in the future. For example, if they submit a query to a rail journey planning website to travel from railway station U to railway station W after 14:00 on 17 June 2017, it may be inferred that there is a likelihood that they will travel on one of the trains that are scheduled to operate between those stations at that time. Furthermore, if in the results webpage from their user query they are presented with multiple train services that meet their requirements and they request further detailed service information for one of those train services (for example, by selecting a 'More Information' button for one of the train services displayed on the results webpage), it may be inferred that they are most likely to travel on that train service.

Since some transportation information providers receive user queries from 10,000s, 100,000s, or even 1,000,000s of unique users per day, a useful prediction of likely user demand may be determined based on the interactions of each user with the transportation information provider. Furthermore, it may be straightforward to scale the process across multiple different, potentially independent, transportation information providers (for example, by using an API or SDK enable sharing of user interaction information with the demand prediction system), and track the interactions of unique users across the different transportation information providers. Consequently, it may be possible to straightforwardly bring together useful information from a variety of different sources that might otherwise have remained compartmentalised and thereby develop an even better understanding of likely user demand across a large, complex transportation network.

Throughout the present disclosure, the terminology 'transportation network', 'transportation nodes' and 'transportation services' is used. In the examples, for the sake of simplicity, we shall mostly focus on the transportation network being a train network (which may be a regional train network, a national train network or an international train network), the transportation nodes being railway stations on the train network and the transportation services being train services on the train network. However, the present disclosure is not limited to train networks, and may equally be applied to any other form of transportation network. Furthermore, the present disclosure is not limited to transportation networks that are 'single-mode' and could equally be applied to 'multi-modal' transportation networks. For example, the transportation network could include some transportation nodes that are railway stations, some others that are bus stops/stations, some others that are metro stations and some others that are a combination of two or more of those (for example, a combined railway and bus station, etc), in which case the transportation services may comprise train services, bus services and metro services.

Furthermore, the disclosures in this application are not limited to public transportation services, but may be applied to other forms of transportation. For example, the transportation network may be a road network, wherein the transportation nodes comprise road intersections and/or points of interest and/or navigation waypoints and/or car parks and/or individual parking spaces within a car park., etc, and the transportation services may comprise hire bicycles, or taxis, or autonomous vehicles available for hire, or vehicles that can be used for lift sharing, etc. In this case, the disclosure may relate to users planning or making enquires about a taxi, or autonomous vehicle, or bicycle journeys on the road network. Furthermore, the transportation network may relate to a multi-modal transportation network, wherein at least one of the modes of transport is a mode of public transport (such as a train, bus, tram, metro, etc) and at least one of the other modes of transport is a private mode of transport (such as a taxi, or a bicycle, or a lift share, etc).

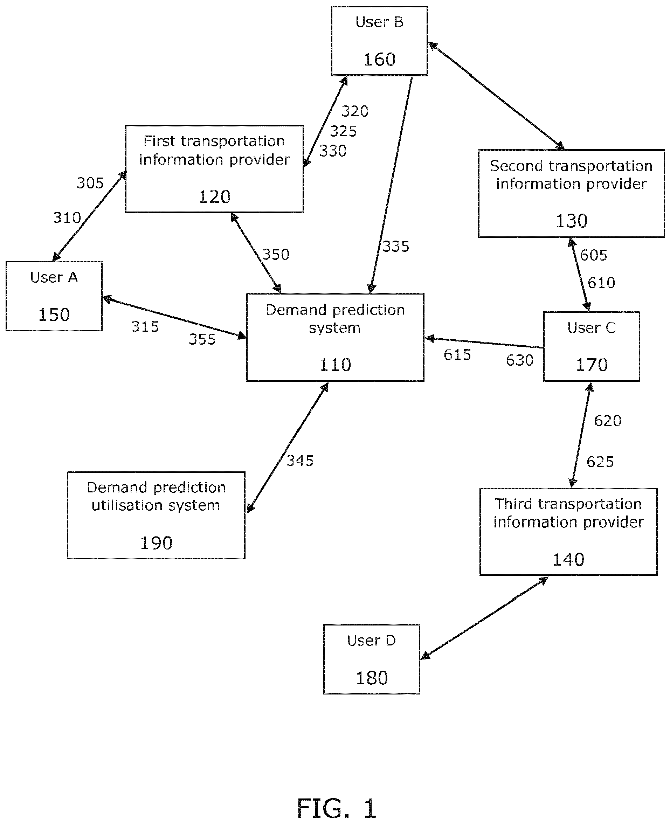

Figure 1 shows an example schematic representation of a demand prediction system 110 in accordance with an aspect of the present disclosure.

In the example representation of Figure 1, there is also included a representation of a first transportation information provider 120, a second transportation information provider 130, a third transportation information provider 140, user A 150, user B 160, user C 170 and user D 180. Also represented are communications interfaces between user A 150 and the first transportation information provider 120, between user A 150 and the demand prediction system 110, between user B 160 and the first transportation information provider 120, between user B 160 and the second transportation information provider 130, between user B 160 and the demand prediction system 110, between user C 170 and the second transportation information provider 130, between user C 170 and the third transportation information provider 140, between user C 170 and the demand prediction system 110, and between the user D 180 and the third transportation information provider 140. These communications interfaces may utilise any suitable communications standards, architectures and protocols, and may preferably utilise internet based data communications. The users may, for example, interact with the transportation information providers by opening on a web-browser on their electronic device (such as a desktop computer, a laptop computer, a tablet computer, a smartphone, etc) a transportation information website offered by a transportation information provider, and/or by using an application (an 'app') offered by a transportation information provider and installed on their electronic device, the app being configured to send data to and receive data from the transportation information provider. In these ways, a user may submit a user query to a transportation information provider, receive results of the query from the transportation information provider and optionally further interact with those results. Further examples of these process are described later.

The notation 'user A', 'user B', 'user C' and 'user D' is utilised in order to distinguish between different unique users (for example, different people and/or different unique electronic devices).

In the example representation of Figure 1, a demand prediction utilisation system 190 in communication with the demand prediction system 110 via a communications interface is also represented. The communications interface may be a one-way communications interface from the demand prediction system 110 to the demand prediction utilisation system 190, or may be a two-way communications interface. The communications interface may utilise any suitable communications standards, architectures and protocols, and may preferably utilise internet based data communications. Further details of the demand prediction utilisation system 190 are given later.

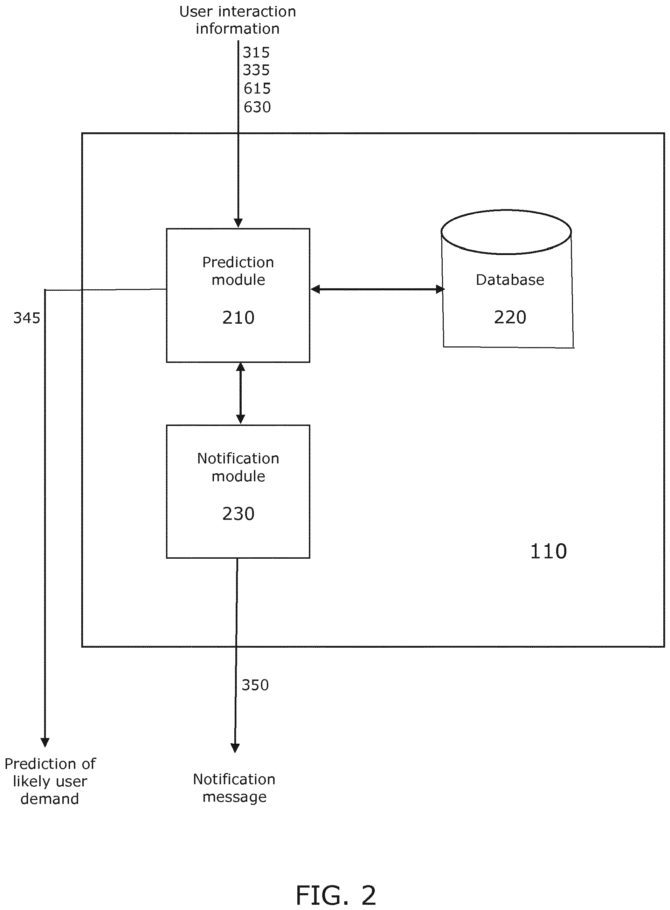

Figure 2 shows an example representation of further details of the demand prediction system 110 in accordance with an aspect of the present disclosure. The demand prediction system 110 comprises a prediction module 210, a database 220 and a notification module 230. Further details of the configuration and operation of the demand prediction system 110 will become apparent from the example processes described later.

It will be appreciated that the modules represented in Figure 2 are merely one non-limiting example implementation of the demand prediction system 110 and any suitable distribution of functionality between different functional units or processors may alternatively be implemented. For example, a single module or entity may perform all of the functionality of the demand prediction system 110. Alternatively, some or all of the modules or units represented in Figure 2 may each be implemented by two or more interconnected modules or entities, for example distributed across a plurality of servers in a cloud based system. Each module or entity of the demand prediction system 110 may be co-located within the same physical unit, or may be located in different geographical places (for example, the prediction module 210 may be implemented in a server or computer in one location, the database may be located in a data store in a different location and the notification module 230 may be implemented in another server or computer in a further location).

The modules represented in Figure 2 may be software modules, each configured to perform the functionality described below when executed on at least one processor (such as a microprocessor). The demand prediction system may therefore comprise at least one processor and a memory unit storing the software for execution on the at least one processor. Alternatively, at least one of the modules may be implemented in any other suitable way, for example as programmable logic or hardware, configured to perform the functionality described below.

Furthermore, the demand prediction system 110, or each module that goes to make up the demand prediction system 110, may be implemented as part of a larger entity (for example, it may be implemented as part of a server or other form of electronic device, that may also be configured to perform other related or unrelated functions), or may be implemented as a standalone entity (for example, a dedicated server or other electronic device, configured to perform only the functionality of the demand prediction system 110, or one or more of the modules that go to make up the demand prediction system 110).

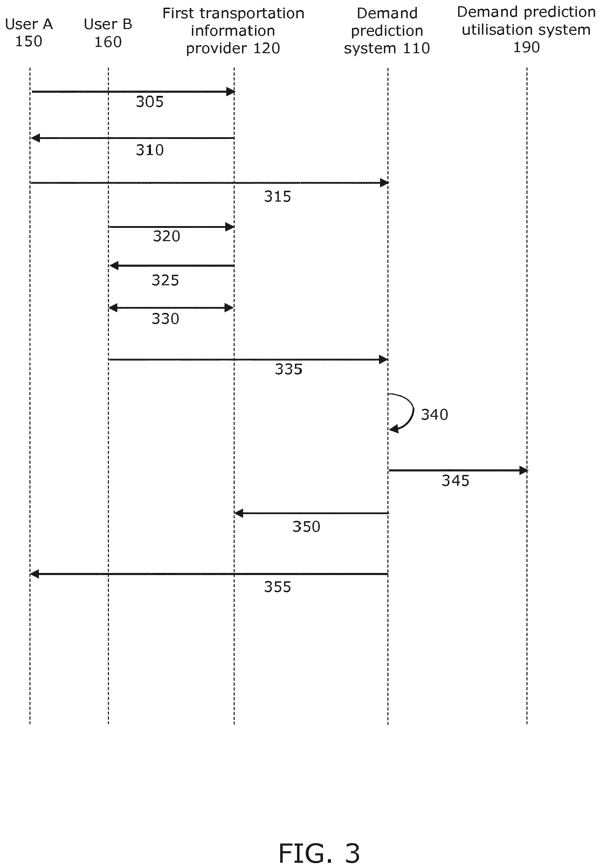

Figure 3 shows a representation of a sequence diagram of a first example process in accordance with an aspect of the present disclosure. The communications steps represented in Figure 3 are also identified in Figures 1 and 2 where appropriate.

In Step 305, user A 150 submits a user query to the first transportation information provider 120. The user query may relate to an aspect of the transportation network, for example the first transportation information provider 120 may be a rail network journey planner and the user request may be for information on train services that could get the user from a first railway station to a second railway station at or before a desired time of arrival at the second railway station (for example, arrival at or before 10am tomorrow).

Examples of information that may be included in the user query include one or more of: a transportation departure time (for example, any transportation services departing from a departure location at 09.00, or at 14.54, etc); a transportation departure period of time (for example, any transportation services departing from a departure location after 11.15, or between 17.00-18.30, etc); a transportation departure location (for example, a transportation node on the transportation network, such as a railway station, or some other location, such as the user's home, which may not be a node on the transportation network); a transportation arrival time (for example, any transportation services arriving at an arrival location at 06.50, or 09.18, etc); a transportation arrival period of time (for example, any transportation services arriving at an arrival location before 15.30, or alternatively arriving after 10.57, or alternatively arriving between 14.00-15.00, etc); a transportation arrival location (for example, a transportation node on the transportation network, such as a railway station, or some other location, such as the user's home, which may not be a node on the transportation network); a mode of transport identifier indicative of a user desired mode of transportation for at least part of a journey on the transportation network (for example, if the first transportation information provider is a navigation tool, this may be an indication that the user wishes to plan a journey using public transportation services rather than private transportation services, or using buses rather than using trains, etc).

Further examples of information that may additionally or alternatively be included in user query include one or more of: an identifier of a transportation node for which the user would like information relating to transportation service departures (for example, a request for a departures board for that transportation node), arrivals (for example, a request for an arrivals board for that transportation node) and/or through services (for example, a request for information on what transportation services will pass through that transportation node).

In Step 310, the first transportation information provider 120 returns to user A 150 results from their query. For example, the first transportation information may return a webpage displaying the results, or may return the results to a transportation information provider app that user A 150 is running on their device. The results may identify one or more different transportation services that fulfil the requirements of the user query, so that that information can be displayed to user A 150 on their electronic device.

The demand prediction system 110 may have provided an Application Programming Interface (API) or a Software Development Kit (SDK) for inclusion in their website or app. The API or SDK will be configured such that the returning of the results to user A 150 in Step 310 triggers the user's web browser or app to download/activate the API or SDK so that it can detect user interaction information and communicate that information to the demand prediction system 110. The skilled person will readily appreciate how APIs or SDKs of this type may be implemented, for example when implementing web analytics tools.

In Step 315, first user interaction information is communicated from user A 150 to the demand prediction system 110. The first user interaction information relates to the interaction between user A 150 and the first transportation information provider 120. In this example, the interaction between user A 150 and the first transportation information provider 120 is limited to the user query and the results returned by the first transportation information provider 120. Therefore, in this instance, the first user interaction information may comprise at least part of the user query from user A 150 and/or at least part of the results returned to user A 150.

In Step 320, user B 160 submits a user query to the first transportation information provider 120. This user query may be similar to that described earlier in respect of Step 305.

In Step 325, the first transportation information provider 120 returns to user B 160 results from their query. This may be similar to Step 310 described earlier. Again, the returned results may trigger user B's web browser or app to download/activate the API or SDK to detect user interaction information and communicate it to the demand prediction system 110.

In Step 330, further interaction takes place between user B 160 and the first transportation information provider 120. For example, user B 160 may request further details relating to one or more of the transportation services that were returned in Step 320 and/or user B 160 may undertake a ticket purchasing process for one or more of the transportation services that were returned in Step S320 and/or user B 160 may hover their computer cursor over one or more of the transportation services that were returned in Step S320 (for example, if user B 160 is using a desktop or laptop computer) or may touch on one or more of the transportation services that were returned in Step S320 (for example, if user B 160 is using a touchscreen device, such as a tablet computer or smartphone, etc).

In Step 335, further first user interaction information is communicated from user B 160 to the demand prediction system 110, relating to the interaction between user B 160 and the first transportation information provider 120. In addition to, or as an alternative to, the details identified above with respect to Step 315, in this instance the user interaction information may comprise information relating to the interaction that took place during Step 330. For example, it may comprise one or more of: an identification of one or more transportation services for which user B 160 requested further detailed service information; an identification of one or more transportation services for which user B 160 purchased tickets; identification of one or more transportation services and/or transportation nodes that user B 160 hovered their cursor over (or touched on) and optionally how long the cursor was hovered over (or how long the touch lasted on) the transportation services and/or transportation nodes, etc.

Whilst in this particular example, user interaction information relating to user B 160 is sent in a single communication step 335, in an alternative, each interaction that user B 160 makes (for example, each time user B 160 requests more information, or changes the parameters of the query, etc) the API or SDK on user B's device may detect the interaction and report it to the demand prediction system 110.

In Step 340, the demand prediction system 110 determines a prediction of likely user demand for at least part of the transportation network based at least in part on user interaction information received from the first transportation information provider 120.

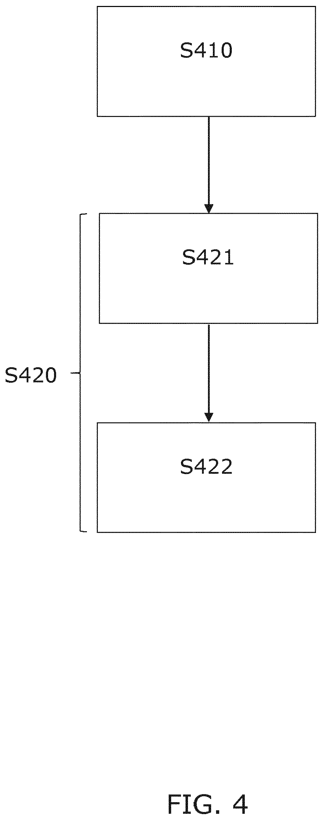

Figure 4 shows an example process by which the demand prediction system 110 represented in Figure 2 may determine a prediction of likely user demand.

In Step S410, the prediction module 210 receives first user interaction information, the first user interaction information relating to the interactions of a plurality of users with the first transportation information provider 210 (for example, Step S410 may correspond with Steps 315 and 335 described earlier, where user interaction information relating to user A 150 and user B 160 are communicated to the demand prediction system 110).

Having received the first user interaction information, in Step S420 the prediction module 210 determines a prediction of likely user demand for at least part of the transportation network based at least in part on the first user interaction information. There are various different ways in which the prediction module 210 may determine this prediction based at least in part on the first user interaction information.

However, Figure 4 shows a representation of example sub-steps S421-S422 that may be performed to make the determination.

In Step S421, the prediction module 210 stores at least part of the first user interaction information in a graph structure of the database 220. The database 220 is configured for storing data in a graph structure, for example using a Graph Database Management System (Graph DBMS). Techniques for how to implement a Graph DBMS will be well understood by the skilled person, for example as described at https://en.wikipedia.org/wiki/Graph_database, and so are not explained in detail in the present disclosure.

Information relating to transportation is, by its nature, aligned to physical infrastructure and services within a transportation network (such as bus stops, railway stations, road interactions, buses, trains, road vehicles, etc). In general, transportation operators and infrastructure providers tend to work together to agree standard identifiers for the different parts of the transportation network. For example, in the UK, there is a Nationwide database for Public Transport Access Nodes (NaPTAN) comprising all available access points to the UK bus, coach and rail network (for example, bus stops, coach stops and railway stations). Similar databases exist for transportation services operating on the transportation network, for example every train service in the UK is identified by a unique TrainUIC allocated by the infrastructure operator "Network Rail". Similar transportation network databases exist in other territories and countries around the world.

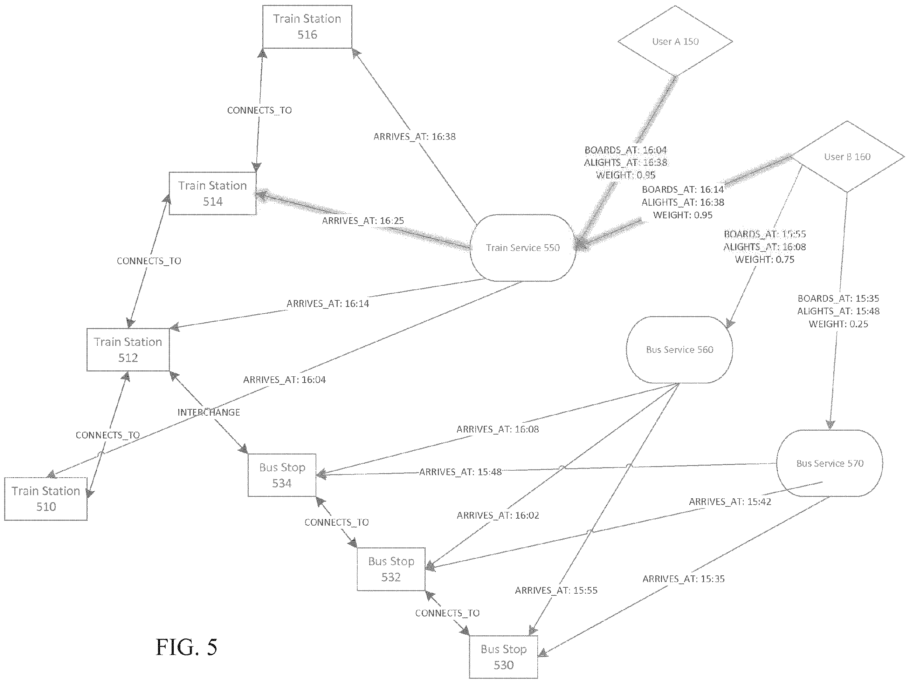

Therefore, each transportation node and transportation service within the transportation network can be uniquely and consistently identified, across various different modes of transportation. As a result, the graph structure stored in the database 220 may uniquely and consistently identify each transportation service and transportation node, and thus be aligned to the transportation network. In particular, the graph structure may identify a plurality of transportation nodes in the transportation network (for example, as identified in the NaPTAN) and a plurality of transportation services in the transportation network (for example, as defined by TrainUIC and other similar databases). At least some of the transportation services may be associated, or linked, to at least one of the plurality of transportation nodes, for example to link a transportation service to the transportation nodes at which passengers may board or alight the transportation service. More details of the graph structure are described below with reference to Figure 5. Thus, a single-mode or multi-mode transportation network may be modelled in the graph structure stored in the database 220.

In Step S421, the first user interaction information may be stored within the graph structure so as to associate the interaction between users and transportation information providers with particular transportation nodes and/or services that the users have been enquiring about. Each of the plurality of users for which user interaction information has been received may be uniquely identified by the prediction module 210, for example by using cookie tracking or other similar techniques such as ETags (https://en.wikipedia.org/wiki/HTTP ETag#Tracking using ETags), or HTML5 Local Storage (http://johnsteinmetz.net/blog/using-html5-local-storage-vs-cookies-for-user-tracking/). At least part of each user's interaction information may then be stored in the Graph DBMS by storing an association between a unique user identifier (i.e., a Tag) and at least some of the transportation nodes and/or services that are identified in the interaction information. The association may comprise a weighting that is indicative of the relative likelihood that the user may use a transportation service and/or node. The nature of the weighting may take any suitable form that is indicative of a relative likelihood that a user will use one particular transportation service and/or node as opposed to using a different transportation service and/or node (or indeed not use any transportation service and/or node). For example, the weight may be a probability between 0 to 1, or any other arbitrary relative weighting.

A first time stamp may optionally also be stored to identify when the user's interaction with the transportation information provider took place and/or a second time stamp may optionally be stored to identify when the intended use of the transportation network is likely to take place. The second time stamp may not be required where the user is likely to be using a transportation service that runs to a timetable (in which case the transportation service implicitly has its own time stamp), but may be useful if the user is expected merely to visit or pass through a transportation node without using any transportation service.

Consequently, an association between different users and the nodes and/or services of the transportation network that they may use in the future may be created, such that a picture of potential user demand on the transportation network may be built up.

Figure 5 shows an example visualisation of a graph structure stored in database 220 for a very simple transportation network comprising seven transportation nodes, three transportation services and two users. These are as follows:

### Users

User A 150
User B 160

### Transportation nodes

Train station 510
Train station 512
Train station 514
Train station 516
Bus stop 530
Bus stop 532
Bus stop 534

### Transportation services

Train service 550
Bus service 560
Bus service 570

In the graph structure there is a "connects_to" association between train station 510 and 512, indicating that these two transportation nodes are connected to each other by a transportation path (in this case, a railway line). Likewise, there are also "connects_to" associations between train station 512 and train station 514, and between train station 514 and train station 516. There are also "connects_to" associations between bus top 530 and bus stop 532, and between bus stop 532 and bus stop 534. There is also an "interchange" association between bus stop 534 and train station 512, indicating that a user may change from a bus service to a train service at these nodes.

The graph structure also comprises associations between the transportation services and the transportation nodes. The association between train service 550 and train station 510 indicates that train service 550 will arrive at train station 510 at 16:04. Similar associations between train service 550 and the other train stations indicate the times at which train service 550 will arrive at those stations. The graph structure also comprises similar associations between each of the bus services and the bus stops, indicating the times at which the bus services will arrive at each of the bus stops. It will be appreciated, therefore, that these elements of the graph structure are aligned to the transportation network and the timetables that the transportation services run to. The associations between transportation services and nodes may comprise additional information as necessary, for example a day of the week and/or date of the year in the case that the arrival times of a service at each node vary depending on the day of the week or date of the year, or a departure time if the timetabled departure time differs from the timetabled arrival time, etc.

The graph structure also comprises an association between the users and the transportation services. Each association identifies a user boarding time and alighting time for the transportation service and a weighting that is indicative of the likelihood that the user will board and alight the transportation service at those times. The weightings identified in Figure 5 are based on the following example scenario.

User A 150 has requested from the first transportation information provider 120 information for trains travelling from train station 510 to train station 516 after 4pm. They are presented with one option (train service 550) departing from train station 510 at 16:04, which they then click on. The first user interaction information received by the demand prediction system 110 identifies this interaction information and the prediction module 210 determines that it is highly likely that user A 150 will take train service 550. It therefore associates user A 150 to train service 550 (and implicitly each of the train stations 510-516) with a weighting of 0.95.

User B 160 has requested from the first transportation information provider 120 information for a multi-modal journey from bus stop 530 to train station 516. They are presented with one journey option departing from bus stop 530 at 15:35 (bus service 570) and another journey option departing from bus stop 530 at 15:55 (bus service 560), both of which connect with train service 550 departing from train station 512 at 16:14. User B 160 clicks for more details on bus service 560. The first user interaction information received by the demand prediction system 110 identifies this interaction information. Because user B 160 interacted with details of bus service 560, but not with details of bus service 570, the prediction module 210 determines that there is a greater likelihood of them using bus service 560. Therefore, an association is stored in the graph structure between user B 160 and bus service 560 (and implicitly each of the bus stops 530-534) with a weighting of 0.75, and an association is stored in the graph structure between user B 160 and bus service 570 with a weighting of 0.75 (and implicitly each of the bus stops 530-534) with a weighting of 0.25. Because they were only provided with one train option, an association between user B 160 and train service 550 is stored with a weighting of 0.95 (and implicitly each of the train stations 510-516).

In this particular example, users are associated with transportation services and implicitly also the transportation nodes at which the services stop. However, in an alternative, associations between users and only one or more transportation nodes may be made, for example where the user interaction information implies that a user may visit a transportation node but not actually use any transportation service (for example, if they have requested transportation node facilities information from a transportation information provider, such as a toilet facilities query or a shop opening times query, etc).

It can be appreciated, therefore, that based on the user interaction information, the prediction module 210 can assign relative weightings to associations between users and transportation nodes and/or services that are indicative of the relative likelihood of the user using those transportation nodes and/or services. As will be appreciated by the skilled person, the particular weightings that are applied based on what particular details are included in the user interaction information are a matter of the particular configuration and implementation of the prediction module 210. Some further non-limiting examples of relative weightings that may be applied include the following:
a) A ticket purchase for a transportation service may suggest it is highly likely that the user will be on that service, and a weighting indicative of that (for example 0.95, or 0.98, or 1, etc) may therefore be applied to the association between the user and that transportation service.
b) Planning a specific journey for tomorrow and drilling into more detail for a specific service (or saving details of a specific service for later reference) may suggest it is likely that the user will be on that specific service and a weighting indicative of that (for example, between 0.6-0.8) may therefore be applied to the association between the user and that transportation service.
c) Planning a journey for next week, and not viewing any further details of the transportation services in the returned results may suggest a relatively low likelihood that the user may be on those services. A weighting indicative of that (for example, between 0.1-0.25) may be applied to the association between the user and each of the transportation services.
d) Checking the departure board for a transportation node at a specific time might suggest it is likely that the user will be on one of those services, without knowing which one. A weight indicative of that (for example, a weighting of 1/Number of Results displayed) may therefore be being applied to the association between the user and each service on the departure board.

It should also be appreciated that relative weightings stored in the graph structure may be modified by the prediction module 210, for example if additional user interaction information is later received that provides further clarification on the transportation services and/or nodes that a user is likely to use. For example, a user may look up information relating to transportation node W, for example to enquire about facilities available at that node. Such an interaction may be stored in the database 220 to indicate that the user has expressed an interest in that node. The same user may subsequently look at transportation service departures from transportation node A going to node W, node Y and node Z. It may be inferred from their earlier interest in node W that the user is more likely to travel to node W and the relative weightings set accordingly.

In Step S422 of Figure 4, the prediction module 210 may determine a prediction of likely user demand by querying the graph structure, for example using typical graph querying languages, such as Graph QL or Gremlin, to obtain specific or aggregated data relating to at least a part of the transporation network. For example, the prediction of likely user demand may offer an indication of relative likely user demand for journey that start or end at a transporation node (or nodes) during a particular period of time, or relative likely user demand on a particular transporation service (or services). This may be performed by traversing particular relationships in the graph structure. For example, the highlighted relationships in Figure 5 show that there is a 95% chance that both User A 150 and User B 160 will be on train service 550 at train station 514 at 16:25. Based on the "alights_at" values for each user, it can also be seen that neither user will alight at train station 514, so will only pass through it. Similar graph traversals may be used to identify how likely it is that users will board or alight from services at a particular transportation node (or nodes) at any given time, or during any given period of time. Thus, it can be seen that the relative weightings stored in the graph structure may be used to determine the relative likelihood that transportation services and/or nodes will be used.

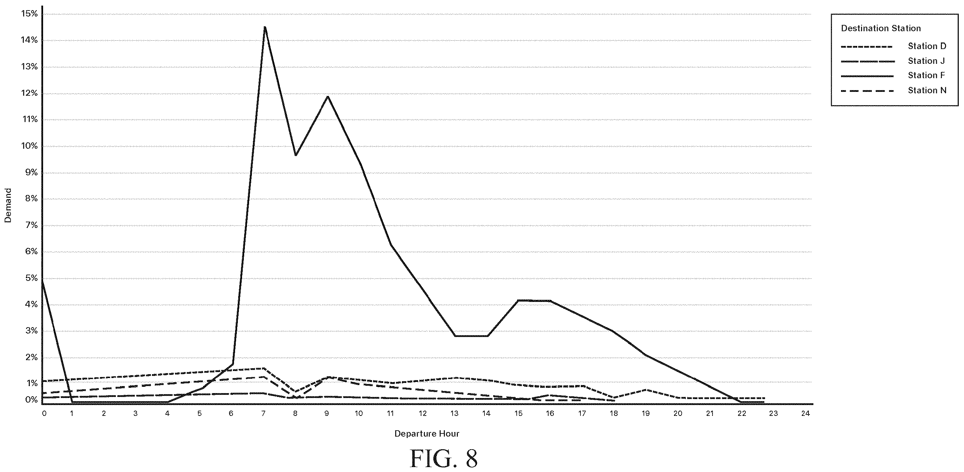

Figure 8 shows a representation of an example predeiction of relative user demand. This example is a prediction of relative user demand of different destination stations (stations D, F, J and N) for passengers starting at station A. As can be seen, at most times throughout the day, station F is relatively the most popular destination for passengers starting their journey at station A, with relative demand peaking between the hours of 06:00 to 12:00. However, between 04:00 to 06:00, it is likely that more passengers will be travelling to stations D and N than to station F.

The prediction of likely user demand may be a prediction of likely relative user demand, that can be relative to any chosen benchmark. For example, likely user demand throughtout the day, or during a particular period of time, or at a specific point in time, may be determined for one transportation node relative to another transporation node, or for one transporation service relative to another transportation service, or for various different potential destination nodes relative to each other (as represented in Figure 8). Consequently, it will be apprecaited that the nature of the prediction of likely user demand is increadibly flexible in the types of prediction that can be made, meaning that the prediction module 210 may determine many different types of prediction of likely user deamnd, for example for different parties having an interest in different areas of the transporation network, or in different types of user demand, etc.

It may be appreciated that by reciving user interacton information information relating to a plurality of user (potentially relating to 10,000s, or 100,000s, or 1,000,000s of unique users every day) and storing that information in the graph structure described above, useful predictions of user demand may be determined for any aspect of the transporation network (for example, user demand at or through one or more transporation nodes and/or user demand on one or more transporation services and/or user demand on one or more transporation routes between particular transporation nodes, etc). Whilst it is not essential that a graph structure is used in the determination of likely user demand, for example other types of database such as RDBMS relational databases such as SQL Server or Oracle, or NoSQL data bases such as Cassandra or MongoDB may be used, it may nevertheless be helpful for querying the data at scale, since graph structures of this type may be straightforwardly scaled up to accommoate information relating to a large scale transporation network (with 10,000s, 100,000s, 1,000,000s, etc) of nodes and/or services, and/or to accomodate information relating to a large numebr of different users (for example, 10,000s, 100,000s, 1,000,000s, 10,000,000s, 100,000,000s, etc).

Furthermore, because it is not based on historical usage information, changes in likely user demand caused by unusual events may be predicted more accurately. For example, if a major transporation node (such as a railway terminus) in the transporation network suffers a major distruption (for example, the transporation node may be temporarily closed due to a security alert, or transporation services may not be able to get into or out of the transporation node due to an infrasture failure at the transporation node, etc), it is likely that a large volume of people who would normally utilise that transporation node will query transporation information providers for alternative transporation routes that avoid that transporation node. This may cause an increase in expected user demand for other transporation nodes and/or services on the transporation network as users are diverted to those other transporation nodes and/or services. This may be very quickly identified by the techniques described above, which may be very helpful, for example, for infrastructure operators so that they can make rapid preparations for the unplanned increased volume of users at particular transporation nodes and/or services.

In a further benefit, it may be appreciated that in contrast to existing techniques for determining historical use on transportation networks, which may rely on manual counting or ticket validation monitoring, likely user demand predictions may straightforwardly be determined using the techniques described above for any parts of a large, potentially multi-modal, transportation network. The costs and complexity of doing so may be reduced, particularly compared with manual counting, as the technique described above requires only that user interaction information is forwarded to the demand prediction system 110, for example by the transportation information providers incorporating an API or SDK into their webpages or applications, and that that information is then processed by the demand prediction system 110 to determine a prediction of likely user demand.

Returning to Figure 3, some example uses of predictions of likely user demand are disclosed. In particular, in Step 345, a prediction of likely user demand is communicated to the demand prediction utilisation system 190. The demand prediction utilisation system 190 may be any entity that has an interest in likely user demand on the transportation network. For example, they may be an infrastructure provider for at least part of the transportation network, and therefore have an interest in likely user demand, and also in historical user demand which may be determined by maintaining a record of previous predictions of likely user demand over a period of time. This may help with the planning of maintenance scheduling on the transportation network, or changes to transportation timetables, etc. In some instances, the prediction of likely user demand communicated to the demand prediction utilisation system 190 may be one or more predictions of likely user demand for a particular transportation node(s) and/or transportation services(s). Additionally, or alternatively, the prediction module 210 may communicate the data stored in the database 220 to the demand prediction utilisation system 190, so that the demand prediction utilisation system 190 may perform its own analysis. Therefore, in the present disclosure, the stored data can itself be seen as a prediction of likely user demand. Consequently, determination of a prediction of likely user demand encompasses the maintaining of the stored data by the prediction module 210 described above.

In Step 350, a prediction of likely user demand is communicated to the first transportation information provider 120. This may be useful for the first transportation information provider 120 for a variety of different reasons. For example, the first transportation information provider 120 may use the prediction to try to influence future user behaviour. For example, the first transportation information provider 120 may receive a new user query and identify from the prediction of likely user demand that a transportation service that meets the requirements of the new user query is likely to experience a particularly high demand. The first transportation information provider 120 may therefore try to influence the user that submitted the new user query to use a different transportation service(s), for example by giving it more prominence on the webpage where the query results are displayed to the user, or by offering other services at a lower price, or offering the user some other incentive such as discount coffee at a transportation node if a later transportation service is taken, etc.

In step 355, the notification module 230 may issue a notification message to user A 150. The notification module 230 may generate the notification message based on user interaction information that included interaction information relating to user A 150 and on the prediction of likely user demand. In one particular example, the notification module 230 may be configured to send a notification message to any users that are expected to pass through a particular transportation node during a particular period of time (for example, to give them information specific to that transportation node just before they are likely to be using it, etc). The notification module 230 may therefore receive from the prediction module 210 a prediction of likely user demand for that particular transportation node during that particular period of time (for example, by requesting it from the prediction module 210, or by periodically receiving it without request, etc). The prediction may comprise a unique user identifier (a Tag) for each user that is predicted to be passing through that transportation node during the particular period of time (or the notification module 230 may query the database 230 for such information after receiving the prediction), using which the notification module 230 may determine a communications address for each user, using which the notification message may be sent to the users (for example, by looking up in a database of communications addresses associated with each unique user identifier, or by using the unique user identifier in the case where the unique user identifier is itself a communications address). Thus, the notification message may be based on the prediction (since that is the mechanism by which particular users may be predicted to be using a transportation node(s) and/or service(s)) and on the user interaction information (since that is the ultimate source of the unique user identifiers). Notification messages may be particularly useful when there is a desire to target messages to people who are likely to be in a particular place at a particular time, or where some unexpected transportation network disruption is identified from predictions of likely user demand and the users that are likely to be affected can be identified and notification messages sent to them to warn them of the disruption and/or make suggestions for how they might best avoid the disruption.

In the above, three different uses of predictions of likely user demand are described. It will be appreciated that the particular way in which predictions of likely user demand are used is not essential to the present disclosure. Indeed, it may be used in any or all of the ways described above, or additionally or alternatively for any other purpose.

Whilst in the above description the notification module 230 is said to be part of the demand prediction system 110, it will be appreciated that it is an optional feature (since notification messages need not be sent), or may additionally or alternatively be a part of any other entity, such as the first transportation information provider 120 or demand prediction utilisation system 190, or be a standalone entity in communication with the demand prediction system 110.

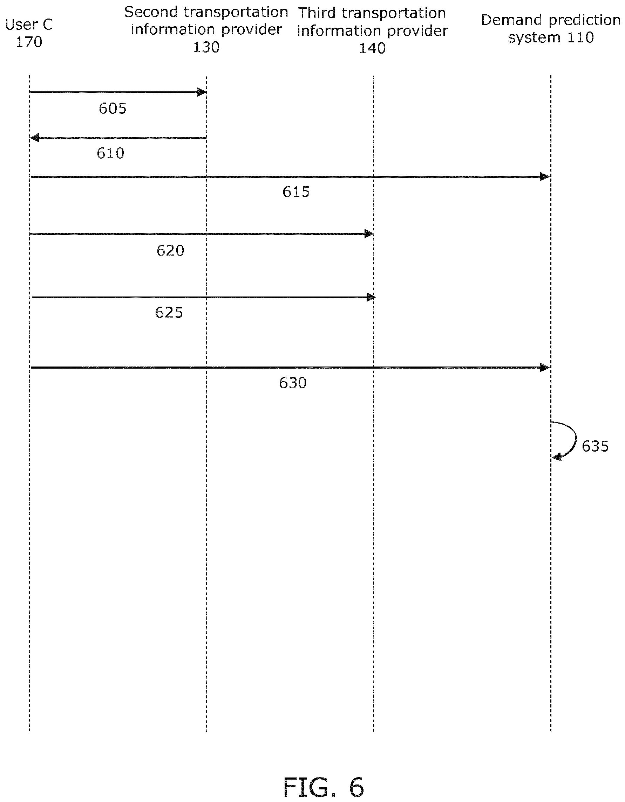

Figure 6 shows a representation of a sequence diagram of a second example process in accordance with a further aspect of the present disclosure. The communications steps represented in Figure 6 are also identified in Figures 1 and 2 where appropriate.

In Step 605, user C 170 submits a user query to the second transportation information provider 130. The user query may take the form described earlier with respect to Step 305 of Figure 3.

In Step 610, the second transportation information provider 130 returns to user C 170 results from their query. The returned results may take the form described earlier with respect to Step 310 of Figure 3.

In Step 615, user C 170 communicates second user interaction information to the demand prediction system 110, relating to the interaction between user C 170 and the second transportation information provider 130. The second user interaction information may be similar to the first user interaction information described earlier with respect to Steps 315 and 335 of Figure 3.

In Step 620, user C 170 submits a user query to the third transportation information provider 140. The user query may take the form described earlier with respect to Step 305 of Figure 3. The third transportation information provider 140 may be independent from the second transportation information provider 130, in that they may not share any information with each other, or may be operated by different entities. The second transportation information provider 130 and third transportation information provider 140 may provide information relating to the same or overlapping parts of the transportation network (for example, they may operate different train schedule information websites, or may provide different journey planning tools for the same road network, etc), or may provide information relating to different parts of the transportation network (for example, the second transportation information provider 130 may provide information relating to a train network and the third transportation information provider 140 may provider information relating to a bus network).

In Step 625, the third transportation information provider 140 returns to user C 170 results from their query. The returned results may take the form described earlier with respect to Step 310 of Figure 3.

In Step 630, user C 170 communicates third user interaction information to the demand prediction system 110, relating to the interaction between user C 170 and the third transportation information provider 140. The third user interaction information may be similar to the first user interaction information described earlier with respect to Steps 315 and 335 of Figure 3.

The demand prediction system 110 may also receive other second user interaction information from other users relating to their interactions with the second transportation information provider 130, and also other third user interaction information from other users relating to their interactions with the third transportation information provider 140. Thus, in this example, if the second user interaction information is thought of as relating to a first plurality of users and the third user interaction information is thought of as relating to a second plurality of users, it can be seen that user C 170 is part of both the first plurality of users and the second plurality of users.

In Step 635, the demand prediction system 110 determines a prediction of likely user demand for at least part of the transportation network. This determination may be carried out as described earlier with respect to Step 340 of Figure 3. The determined prediction may then be utilised in any suitable way, for example as described earlier with reference to any of Steps 345 and/or 350 and/or 355.

It will be appreciated that a unique user ID for user C 170 (as described earlier with reference to Step 340) enables the interaction of user C 170 with the two different transportation information service providers to be tracked consistently, allowing a more complete understanding of a user's likely use of the transportation network to be reached. Consequently, a more accurate prediction of likely user demand may be reached, particularly where the different transportation information service providers are independent from each such that their information would not normally be shared and would therefore have been lost.

It will be appreciated that whilst the example represented in Figure 3 relates to only two users interacting with one transportation information provider, and the example represented in Figure 6 relates to only one user interacting with two different transportation information service providers, the same process may be applied for any number of users (for example, a plurality of users, such as 2, or 6, or 9, or 10s, or 100s, or 1,000s, or 10,000s, or 100,000s, or 1,000,000s, etc of users) and any number of transportation information service providers (for example, a plurality of transportation information providers, such as 2, or 4, or 8, or 10s, or 100s, etc), where each user may interact with one or many different transport information providers.

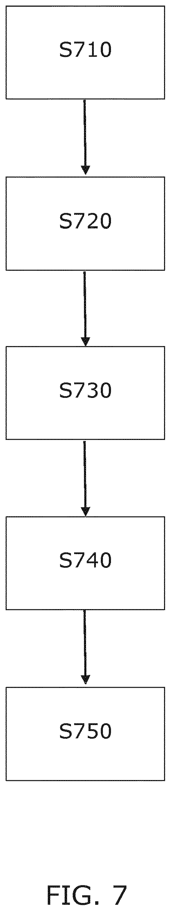

Figure 7 shows an example flow diagram for a method of a user to communicate user interaction information to the demand prediction system 110 in accordance with a further aspect of the present disclosure.

In step S710, the user issues a user query to a transportation information provider relating to the transportation network. This step corresponds with Steps 305, 320, 605 and 620 described earlier.

In Step S720, the user receives from the transportation information provider results from the user query. For example, if the user query relates to a particular departure transportation node and/or arrival transportation node, the results may identify transportation services that are relevant to the user's query. As explained earlier, the returned results may comprise API or SDK code to cause the user subsequently to deliver user interaction information to the demand prediction system 110.

In Step S730, on receipt of the results, the user device is triggered to download/activate an API or SDK to enable it to determine and deliver the user interaction information to the demand prediction system 110. In the event that the API or SKI code has previously been downloaded by the user device, this step may not be performed.

In Step S740, the user device determines the user interaction information based on its interaction with the transportation information provider, for example based on at least part of the query submitted to the transportation information provider and/or on at least part of the returned results and/or on at least part of the subsequent interactions, as explained earlier.

In Step S750, the user device outputs the user interaction information relating to the interaction between the user and the transportation information provider for communication to the demand prediction system 110 for use in determining a prediction of likely user demand for at least part of the transportation network. This step corresponds with Steps 315, 335, 615 and 630 described earlier.

This method may be performed by a computer program configured to perform the method when executed on one or more processors (for example, microprocessors) of an electronic device (such as a desktop computer, or laptop computer, or a tablet computer, or a mobile device,). For example, the computer program may comprise a non-transitory computer readable medium comprising instructions configured to perform the method when executed on one or more processors of an electronic device. The computer program may comprise an API or SDK relating to the demand prediction system 110, so that user device may straightforwardly carry out the process steps S740 and S750. Consequently, existing systems may be straightforwardly modified so as to supply the demand prediction system 110 with the user interaction information that it needs to determine predictions of likely user demand, which may result in a high up-take from various different transportation information providers, and therefore more accurate predictions of likely user demand.

The user device may comprise any type of electronic device (for example, a desktop computer, or laptop computer, or a tablet computer, or a mobile device, or a server) comprising memory for storing the computer program (for example, volatile or nonvolatile memory, such as RAM, ROM, flash memory, solid state storage, hard disk drive, optical disk, etc, etc) and one or more processors (such as microprocessors) for executing the computer program.

The skilled person will readily appreciate that various alterations or modifications may be made to the above described aspects of the disclosure without departing from the scope of the disclosure. For example, the above description explains one particular technique for the demand prediction system 110 to determine an estimate of likely user demand on at least part of the transportation network using a graph structure. However, it will be appreciated that this particular technique is not essential to determining the prediction of likely user demand and that the prediction of likely user demand may be determined based at least in part on user interaction information in any other suitable way. For example, the user interaction information may be stored in memory (such as a database, or any other means) using any other suitable type of data structure and the prediction of likely user demand may be determined using techniques consistent with the way in which the user interaction information has been stored. Alternatively, user interaction information may not be stored, such that a prediction of likely user demand may be determined immediately on receipt of the user interaction information and either updated on receipt of each new set of user interaction information, or a new prediction determined each time a new set of user interaction information is received. Consequently, it will be appreciated that database 220 of the demand prediction system 110 is an optional feature.

Furthermore, whilst it may be preferable for the users to determine and provide the user interaction information to the demand prediction system 110, for example so that unique user identifiers may be included in the user interaction information in a way that enables the same users to be uniquely and consistently identified and tracked in their interactions with different, potentially independent, transportation information providers, in an alternative the transportation information providers may determine and provide the user interaction information to the demand prediction system 110. It may still be possible for user identifiers to be included in the user interaction information, but these may only uniquely and consistently identify users in the context of a single transportation information provider (which may still be very useful, particularly where the transportation information provider is large, for example receiving 100,000s or 1,000,000s of unique user queries each day).

As explained earlier, whilst the above description mostly relates to public transportation networks, the techniques may additionally or alternatively relate to other types of transportation, such as taxis and/or autonomous vehicles. For example, the database 220 may store an identification of taxis and/or autonomous vehicles that form a fleet of taxis and/or autonomous vehicles as individual services. A taxi or autonomous vehicle that is not currently being hired may be associated in the database with a proximal transportation node in the transportation network. When the taxi or autonomous vehicle is hired to travel from node A to node B, associations may be stored that link the vehicle to node A with an expected or actual time of departure and that link the vehicle to node B with an expected time of arrival (optionally, one or more further nodes that will be passed through on the journey, such as way-points or intermediate stops on the journey, may also be associated to the vehicle). One or more users that have hired, or are deemed likely to hire, the vehicle may also be associated to the vehicle with a likelihood weighting. This may be particularly useful for lift sharing scenarios, or where there is a desire for taxis or autonomous vehicles to anticipate unusual spikes in demand. For example, using the above techniques, the prediction of likely user demand may identify that a transportation service such as a train service has unexpectedly terminated mid-journey, causing a number of passengers to be stranded before they reach their destination, or may identify that due to the cancellation of some transportation services, a number of passengers have been diverted onto services that will take them close to, but not actually to, their desired destination transportation node. In this case, the number of users that may require a taxi or autonomous vehicle to complete their journey may be estimated and the correct number of the most proximal taxis or autonomous vehicles may be despatched quickly, potentially arriving and waiting for users before they have even arrived at the transportation node to use them.

Furthermore, as mentioned earlier, transportation nodes may comprise numerous different types of node on a road network. For example, a car park may be a transportation node, or even each parking space within a car park may be a transportation node. In this way, likely user demand for particular car parks, or even particular car parking spaces, may be determined and potentially used as part of journey planning.

In a further alternative, rather than have the demand prediction system 110 determine the relative weightings based on the user interaction information, relative weights may be included as part of the user interaction information. For example, the API or SDK executed on the user device may be configured to monitor the interaction with the transportation information provider and determine the weightings based on that. The API or SDK may therefore set particular rules for determination of weightings so that the user device can make the determination for itself.

Whilst all of the interfaces represented by arrows in Figures 1, 2, 3 and 6 show direct connections between each of the different entities and modules, it will be appreciated that there may be any number of intermediate entities or modules as part of those interfaces, for example communications routers, etc.

The aspects of the present disclosure described in all of the above may be implemented by software, hardware or a combination of software and hardware. The functionality of the demand prediction system 110 and/or transportation information providers and/or user devices, may be implemented by software comprising computer readable code, which when executed on the processor of any electronic device, performs the functionality described above. The software may be stored on any suitable computer readable medium, for example a non-transitory computer-readable medium, such as read-only memory, random access memory, CD-ROMs, DVDs, Blue-rays, magnetic tape, hard disk drives, solid state drives and optical drives. The computer-readable medium may be distributed over network-coupled computer systems so that the computer readable instructions are stored and executed in a distributed way.

## Claims

1. A demand prediction system for predicting likely user demand on a transportation network comprising a plurality of transportation nodes and a plurality of transportation services between transportation nodes, the system comprising a prediction module configured to:
receive first user interaction information relating to the interactions of a first plurality of users with a first transportation information provider, wherein the first transportation information provider is for providing transportation information relating to at least part of the transportation network to a user in response to a user query; and
determine a prediction of likely user demand for at least part of the transportation network based at least in part on the first user interaction information.

2. The demand prediction system of claim 1, wherein the prediction module is further configured to:
receive second user interaction information relating to the interactions of a second plurality of user with a second transportation information provider, wherein the second transportation information provider is for providing transportation information relating to at least part of the transportation network to a user in response to a user query, wherein
determination of the prediction of likely user demand for at least part of the transportation network is further based at least in part on the second user interaction information.

3. The demand prediction system of claim 2, wherein the first transportation information provider and the second transportation information provider are independent from each other.

4. The demand prediction system of either claim 2 or claim 3, wherein there is at least one user that is part of both the first plurality of users and the second plurality of users.

5. The demand prediction system of any preceding claim, further comprising:
a database comprising data identifying the plurality of transportation nodes and the plurality of transportation services:
wherein the prediction module is further configured to:
store at least part of the first user interaction information in the database; and
determine the prediction of likely user demand for at least part of the transportation network using the data stored in the database.

6. The demand prediction system of claim 5, wherein the database comprises a plurality of weighted associations to associate each of the plurality of users to a respective one or more of the plurality of transportation nodes and/or one or more of the transportation edges, wherein each weighted association is indicative of a relative likelihood that the user will utilise the associated transportation node or transportation service.

7. The demand prediction system of any preceding claim, wherein
the first user interaction information comprises a plurality of unique user identifiers, each uniquely identifying a respective one of the plurality of users.

8. The demand prediction system of any preceding claim, wherein the first user interaction information comprises data indicative of at least part of a user query from at least one of the plurality of users to the first transportation information provider, the user query comprising one or more of:
a transportation departure time;
a transportation departure period of time;
a transportation departure location;
a transportation arrival time;
a transportation arrival period of time;
a transportation arrival location;
a mode of transport identifier indicative of a user desired mode of transportation for at least part of a journey on the transportation network.

9. A method of predicting likely user demand on a transportation network comprising a plurality of transportation nodes and a plurality of transportation services between transportation nodes, the method comprising:
receiving first user interaction information relating to the interactions of a first plurality of users with a first transportation information provider, wherein the first transportation information provider is for providing transportation information relating to at least part of the transportation network to a user in response to a user query; and
determining a prediction of likely user demand for at least part of the transportation network based at least in part on the first user interaction information.

10. A computer program configured to perform the method of claim 9 when executed on one or more processors of an electronic device.

11. An electronic device comprising:
memory comprising the computer program of claim 10; and
one or more processors for executing the computer program of claim 10.

12. A method of providing user interaction information to a demand prediction system, the method comprising:
determining user interaction information based on an interaction between a user and a transportation information provider, wherein the transportation information provider is for providing transportation information relating to at least part of a transportation network to the user in response to a user query; and
outputting the user interaction information for communication to the demand predict system for use in determining a prediction of likely user demand for at least part of the transportation network.

13. A computer program configured to perform the method of claim 12 when executed on one or more processors of an electronic device.

14. The computer program of claim 13, comprising an application programming interface or a software development kit.

15. An electronic device comprising:
memory comprising the computer program of claim 13 or claim 14; and
one or more processors for executing the computer program of claim 13 or claim 14.
